# EUROPEAN PATENT SPECIFICATION

(11) **EP 3 620 373 B1**
(45) Date of publication and mention of the grant of the patent: **03.01.2024**
(21) Application number: 18206601.9
(22) Date of filing: 15.11.2018
(51) Int. Cl.: B64C 13/50, G05D 1/08, B64C 27/56, B64C 27/58, B64D 31/06

(54) **STUCK IN DETENT MONITORS FOR COLLECTIVE AND CYCLIC STICKS**
VERKLEMMTEN DETENT-MONITORE FÜR KOLLEKTIVE UND ZYKLISCHE STICKS
MONITEURS DE DÉTENTE BLOQUÉE POUR MANCHES COLLECTIFS ET CYCLIQUES

(30) Priority: 05.09.2018 US 201816122585
(43) Date of publication of application: 11.03.2020
(73) Proprietor: Textron Innovations Inc., Providence, Rhode Island 02903 (US)
(72) Inventor: Alfred, Jillian, Ft. Worth, TX 76107 (US)
(74) Representative: Barker Brettell LLP

(56) References cited:
- US-A1- 2012 205 494
- US-A1- 2017 345 318
- US-A1- 2018 229 831

## Description

### TECHNICAL FIELD

The present invention relates generally to a method for automated flight control in a rotorcraft and a rotorcraft having a flight control computer (FCC) comprising an error monitor, and, in particular embodiments, to an FCC and method for determining when a detent sensor is defective, and providing flight management functions accordingly.

### BACKGROUND

A rotorcraft may include one or more rotor systems including one or more main rotor systems. A main rotor system generates aerodynamic lift to support the weight of the rotorcraft in flight and thrust to move the rotorcraft in forward flight. Another example of a rotorcraft rotor system is a tail rotor system. A tail rotor system may generate thrust in the same direction as the main rotor system's rotation to counter the torque effect created by the main rotor system. For smooth and efficient flight in a rotorcraft, a pilot balances the engine power, main rotor collective thrust, main rotor cyclic thrust and the tail rotor thrust, and a control system may assist the pilot in stabilizing the rotorcraft and reducing pilot workload.

US2012205494 describes a tactile cueing apparatus for incorporation in an aircraft flight control system comprising a flight control surface, and a pilots inceptor (12) for moving the surface via a servo-assisted mechanical linkage (28) connecting the inceptor to the control surface, the apparatus comprising a force sensor for sensing a force applied to the inceptor by the pilot to move the control surface, an electromechanical actuator (34) configured to be installed with the mechanical linkage between the inceptor and means in the system providing said servo- assistance, and control means programmed to cause the actuator (i) to move so that the linkage moves to a position determined by said force according to a predetermined relationship, (ii) to apply to the inceptor a resisting force according to a predetermined relationship and which when the linkage has moved to its commanded position is equal and opposite to the force sensed by the force sensor.

US2018229831 describes a method of operating a rotorcraft that includes receiving a first sensor value comprising a first coarse resolution portion and a first fine resolution portion, receiving a second sensor value comprising a second coarse resolution portion and a second fine resolution portion, and determining that the second coarse resolution portion corresponds with the second fine resolution portion when a difference between the second sensor value and the first sensor value is within a first threshold.

US2017345318 describes a system that includes a controller including one or more processors disposed onboard an aircraft. The controller is configured to be operably connected to multiple subsystems on the aircraft. The controller receives operating parameters from one or more of the subsystems during a flight of the aircraft. The controller is configured to analyze the operating parameters to determine an abnormal operating condition of the aircraft. The controller is further configured to transmit a display message to a display device onboard the aircraft. The display message provides multiple responsive actions to the abnormal operating condition. The responsive actions are prioritized on the display device to indicate to the flight crew that one or more of the responsive actions are recommended over one or more other responsive actions in the display message.

### SUMMARY

In accordance with a first aspect of the present invention, there is provided a rotorcraft as defined in claim 1. In accordance with a second aspect of the present invention, there is provided a method for operating a rotorcraft as defined in claim 12. Some optional or preferred features are defined in the dependent claims.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a rotorcraft according to some embodiments;
Figure 2 illustrates a fly-by-wire flight control system for a rotorcraft according to some embodiments;
Figure 3 representatively illustrates a three-loop flight control system according to some embodiments;
Figure 4 illustrates a sensor functionality determination system for a rotorcraft according to some embodiments;
Figure 5 illustrates a flow diagram of a method for determining whether a sensor in a rotorcraft is faulty according to some embodiments.

### DETAILED DESCRIPTION OF ILLUSTRATIVE EMBODIMENTS

Illustrative embodiments of the rotorcraft and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The increasing use of rotorcraft, in particular for commercial and industrial applications, has led to the development of larger more complex rotorcraft. However, as rotorcraft become larger and more complex, the differences between flying rotorcraft and fixed wing aircraft has become more pronounced. Since rotorcraft use one or more main rotors to simultaneously provide lift, control attitude, control altitude, and provide lateral or positional movement, different flight parameters and controls are tightly coupled to each other, as the aerodynamic characteristics of the main rotors affect each control and movement axis. For example, the flight characteristics of a rotorcraft at cruising speed or high speed may be significantly different than the flight characteristics at hover or at relatively low speeds. Additionally, different flight control inputs for different axes on the main rotor, such as cyclic inputs or collective inputs, affect other flight controls or flight characteristics of the rotorcraft. For example, pitching the nose of a rotorcraft forward to increase forward speed will generally cause the rotorcraft to lose altitude. In such a situation, the collective may be increased to maintain level flight, but the increase in collective requires increased power at the main rotor which, in turn, requires additional anti-torque force from the tail rotor. This is in contrast to fixed wing systems where the control inputs are less closely tied to each other and flight characteristics in different speed regimes are more closely related to each other.

Recently, fly-by-wire (FBW) systems have been introduced in rotorcraft to assist pilots in stably flying the rotorcraft and to reduce workload on the pilots. The FBW system may provide different control characteristics or responses for cyclic, pedal or collective control input in the different flight regimes, and may provide stability assistance or enhancement by decoupling physical flight characteristics so that a pilot is relieved from needing to compensate for some flight commands issued to the rotorcraft. FBW systems may be implemented in one or more flight control computers (FCCs) disposed between the pilot controls and flight control systems, providing corrections to flight controls that assist in operating the rotorcraft more efficiently or that put the rotorcraft into a stable flight mode while still allowing the pilot to override the FBW control inputs. The FBW systems in a rotorcraft may, for example, automatically adjust power output by the engine to match a collective control input, apply collective or power correction during a cyclic control input, provide automation of one or more flight control procedures provide for default or suggested control positioning, or the like.

FBW systems for rotorcraft must provide stable flight characteristics for FBW controlled flight parameters while permitting the pilot to override or work with any suggested flight parameters suggested by the FBW system. Additionally, in providing enhanced control and automated functionality for rotorcraft flight, the FBW must maintain an intuitive and easy to use flight control system for the pilot. Thus, the FBW system adjusts the pilot flight controls so that the controls are in a position associated with the relevant flight parameter. For example, the FBW system may adjust the collective stick to provide suggested or FBW controlled flight parameters, and which reflect a collective or power setting. Thus, when the pilot releases the collective stick and the FBW provides collective control commands, the collective stick is positioned intuitively in relation to the actual power or collective setting so that, when the pilot grasps the collective stick to retake control, the control stick is positioned where the pilot expects the stick to be positioned for the actual collective setting of the main rotor. Similarly, the FBW system uses the cyclic stick to, for example, adjust for turbulence, drift or other disturbance to the flight path, and may move the cyclic stick as the FBW system compensates the cyclic control. Thus, when the pilot grasps the cyclic stick to take control of flight from the FBW system, the cyclic stick is positioned to reflect the actual cyclic settings.

Embodiments of the rotorcraft and method described herein are directed to a FBW system and method for determining when the pilot is operating a particular pilot control in a rotorcraft. The FBW system may detect that a pilot has control of, or is manipulating, a particular control, and determine that pilot control to be out-of-detent (OOD). Likewise, the FBW system may determine that the stick is in-detent (ID) when the FBW system detects that the pilot has released a particular pilot control. The FBW system may provide different flight profiles, flight management functions, automated flight functions, tactile feedback through the pilot controls, and the like in the different detent states. In some embodiments, the FBW system may use a state machine to track a detent state reflecting pilot inputs from a pilot control, and use a buffer or transition state to handle a change from the ID state and OOD state.

In some embodiments, the FBW system may receive signals from sensors connected to the pilot controls that indicate that the pilot is manually controlling the stick. These sensors may be detent sensors configured to detect pilot inputs to allow the pilot to override commands from the automated flight process. Thus, the detent sensors may be separate from position sensors that detect the overall pilot control position which may include both pilot inputs and FBW system inputs. The FBW system may provide control positioning for automated flight processes by moving the one or more of the pilot controls while allowing the pilot to override the flight control positioning provided or suggested by the FBW system. In some embodiments, the FBW system provides the flight control positioning using a trim motor connected to the flight controls by a gradient spring, an electric clutch or another connection or transmission such as a planetary gear set transmission. The detent sensors may, in some embodiments, determine the slip rate, which may be difference in the actual pilot control position compared to the position of the trim motor, or may be a difference in the trim motor drive speed compared to the speed of rotation of a shaft driven by the pilot controls. For example, in embodiments where the trim motor is connected to the pilot controls by a gradient spring, the detent sensors may determine the slip rate according to compression of the gradient spring indicated by a detent signal, which indicates the pilot control position in relation to the trim motor position. In other embodiments where the trim motor is connected to the pilot controls by an electric clutch, the detent sensors may determine the rate at which the pilot controls caused the clutch to slip in relation to the trim motor position, and which may be a speed differential or a position differential. In yet other embodiments where the trim motor is connected to the pilot controls by a transmission such as a planetary gear set transmission, the detent sensor may be disposed on a secondary output that solely handles pilot inputs, and may determine the pilot inputs from the position of the secondary output.

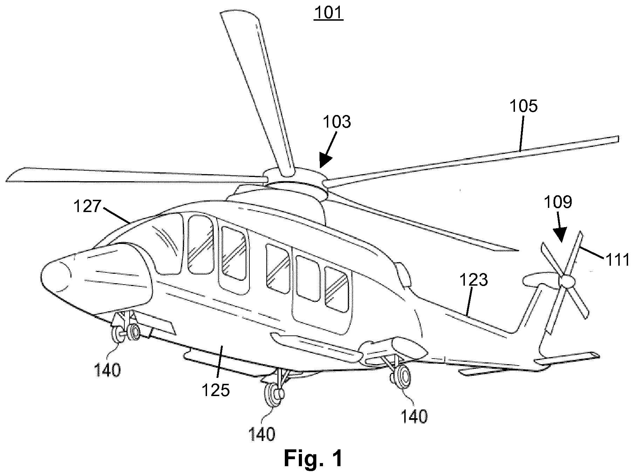

Figure 1 illustrates a rotorcraft 101 according to some embodiments. The rotorcraft 101 has a main rotor system 103, which includes a plurality of main rotor blades 105. The pitch of each main rotor blade 105 may be controlled by a swashplate 107 in order to selectively control the attitude, altitude and movement of the rotorcraft 101. The swashplate 107 may be used to collectively and/or cyclically change the pitch of the main rotor blades 105. The rotorcraft 101 also has an anti-torque system, which may include a tail rotor 109, no-tail-rotor (NOTAR), or dual main rotor system. In rotorcraft with a tail rotor 109, the pitch of each tail rotor blade 111 is collectively changed in order to vary thrust of the anti-torque system, providing directional control of the rotorcraft 101. The pitch of the tail rotor blades 111 is changed by one or more tail rotor actuators. In some embodiments, the FBW system sends electrical signals to the tail rotor actuators or main rotor actuators to control flight of the rotorcraft.

Power is supplied to the main rotor system 103 and the anti-torque system by engines 115. There may be one or more engines 115, which may be controlled according to signals from the FBW system. The output of the engine 115 is provided to a driveshaft 117, which is mechanically and operatively coupled to the rotor system 103 and the anti-torque system through a main rotor transmission 119 and a tail rotor transmission, respectively.

The rotorcraft 101 further includes a fuselage 125 and tail section 123. The tail section 123 may have other flight control devices such as horizontal or vertical stabilizers, rudder, elevators, or other control or stabilizing surfaces that are used to control or stabilize flight of the rotorcraft 101. The fuselage 125 includes a cockpit 127, which includes displays, controls, and instruments. It should be appreciated that even though rotorcraft 101 is depicted as having certain illustrated features, the rotorcraft 101 may have a variety of implementation-specific configurations. For instance, in some embodiments, cockpit 127 is configured to accommodate a pilot or a pilot and co-pilot, as illustrated. It is also contemplated, however, that rotorcraft 101 may be operated remotely, in which case cockpit 127 could be configured as a fully functioning cockpit to accommodate a pilot (and possibly a co-pilot as well) to provide for greater flexibility of use, or could be configured with a cockpit having limited functionality (*e*.*g*., a cockpit with accommodations for only one person who would function as the pilot operating perhaps with a remote co-pilot or who would function as a co-pilot or back-up pilot with the primary piloting functions being performed remotely. In yet other contemplated embodiments, rotorcraft 101 could be configured as an unmanned vehicle, in which case cockpit 127 could be eliminated entirely in order to save space and cost.

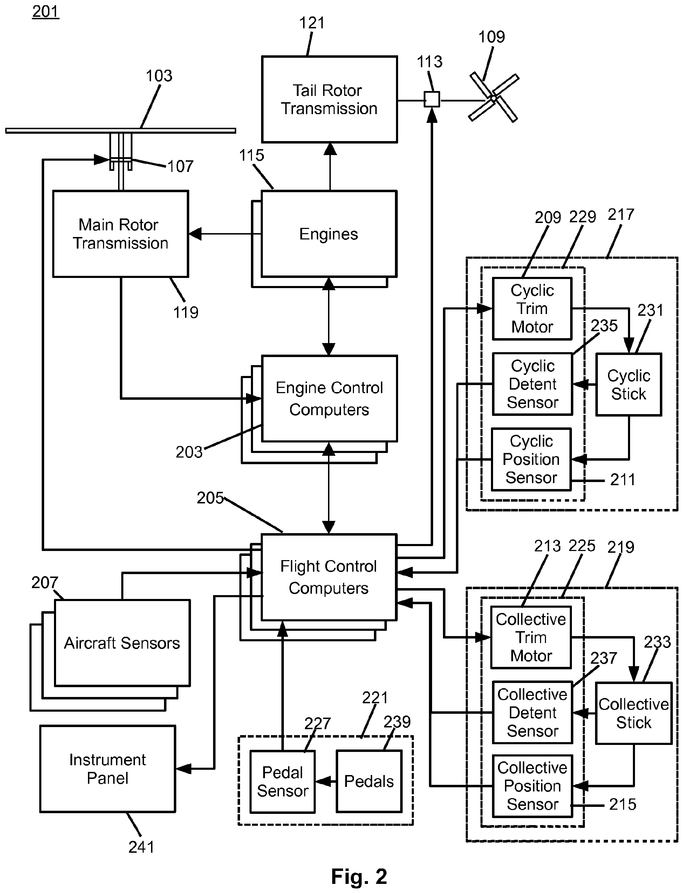

Figure 2 illustrates a fly-by-wire flight control system 201 for a rotorcraft according to some embodiments. A pilot may manipulate one or more pilot flight controls in order to control flight of the rotorcraft. The pilot flight controls may include manual controls such as a cyclic stick 231 in a cyclic control assembly 217, a collective stick 233 in a collective control assembly 219, and pedals 239 in a pedal control assembly 221. Inputs provided by the pilot to the pilot flight controls may be transmitted mechanically and/or electronically (*e*.*g*., via the FBW flight control system) to flight control devices by the flight control system 201. Flight control devices may represent devices operable to change the flight characteristics of the rotorcraft. Flight control devices on the rotorcraft may include mechanical and/or electrical systems operable to change the positions or angle of attack of the main rotor blades 105 and the tail rotor blades 111 or to change the power output of the engines 115, as examples. Flight control devices include systems such as the swashplate 107, tail rotor actuator 113, and systems operable to control the engines 115. The flight control system 201 may adjust the flight control devices independently of the flight crew in order to stabilize the rotorcraft, reduce workload of the flight crew, and the like. The flight control system 201 includes engine control computers (ECCUs) 203, flight control computers (FCCs) 205, and aircraft sensors 207, which collectively adjust the flight control devices.

The flight control system 201 has one or more FCCs 205. In some embodiments, multiple FCCs 205 are provided for redundancy. One or more modules within the FCCs 205 may be partially or wholly embodied as software and/or hardware for performing any functionality described herein. In embodiments where the flight control system 201 is a FBW flight control system, the FCCs 205 may analyze pilot inputs and dispatch corresponding commands to the ECCUs 203, the tail rotor actuator 113, and/or actuators for the swashplate 107. Further, the FCCs 205 are configured and receive input commands from the pilot controls through sensors associated with each of the pilot flight controls. The input commands are received by measuring the positions of the pilot controls. The FCCs 205 also control tactile cues to the pilot controls or display information in instruments on, for example, an instrument panel 241.

The ECCUs 203 control the engines 115. For example, the ECCUs 203 may vary the output power of the engines 115 to control the rotational speed of the main rotor blades or the tail rotor blades. The ECCUs 203 may control the output power of the engines 115 according to commands from the FCCs 205, or may do so based on feedback such as measured revolutions per minute (RPM) of the main rotor blades.

The aircraft sensors 207 are in communication with the FCCs 205. The aircraft sensors 207 may include sensors for measuring a variety of rotorcraft systems, flight parameters, environmental conditions and the like. For example, the aircraft sensors 207 may include sensors for measuring airspeed, altitude, attitude, position, orientation, temperature, airspeed, vertical speed, and the like. Other sensors 207 could include sensors relying upon data or signals originating external to the rotorcraft, such as a global positioning system (GPS) sensor, a VHF Omnidirectional Range sensor, Instrument Landing System (ILS), and the like.

The cyclic control assembly 217 is connected to a cyclic trim assembly 229 having one or more cyclic position sensors 211, one or more cyclic detent sensors 235, and one or more cyclic actuators or cyclic trim motors 209. The cyclic position sensors 211 measure the position of the cyclic stick 231. In some embodiments, the cyclic stick 231 is a single control stick that moves along two axes and permits a pilot to control pitch, which is the vertical angle of the nose of the rotorcraft and roll, which is the side-to-side angle of the rotorcraft. In some embodiments, the cyclic control assembly 217 has separate cyclic position sensors 211 that measuring roll and pitch separately. The cyclic position sensors 211 for detecting roll and pitch generate roll and pitch signals, respectively, (sometimes referred to as cyclic longitude and cyclic latitude signals, respectively) which are sent to the FCCs 205, which controls the swashplate 107, engines 115, tail rotor 109 or related flight control devices.

The cyclic trim motors 209 are connected to the FCCs 205, and receive signals from the FCCs 205 to move the cyclic stick 231. In some embodiments, the FCCs 205 determine a suggested cyclic stick position for the cyclic stick 231 according to one or more of the collective stick position, the pedal position, the speed, altitude and attitude of the rotorcraft, the engine RPM, engine temperature, main rotor RPM, engine torque or other rotorcraft system conditions or flight conditions, or according to a predetermined function selected by the pilot. The suggested cyclic stick position is a positon determined by the FCCs 205 to give a desired cyclic action. In some embodiments, the FCCs 205 send a suggested cyclic stick position signal indicating the suggested cyclic stick position to the cyclic trim motors 209. While the FCCs 205 may command the cyclic trim motors 209 to move the cyclic stick 231 to a particular position (which would in turn drive actuators associated with swashplate 107 accordingly), the cyclic position sensors 211 detect the actual position of the cyclic stick 231 that is set by the cyclic trim motors 206 or input by the pilot, allowing the pilot to override the suggested cyclic stick position. The cyclic trim motor 209 is connected to the cyclic stick 231 so that the pilot may move the cyclic stick 231 while the trim motor is driving the cyclic stick 231 to override the suggested cyclic stick position. Thus, in some embodiments, the FCCs 205 receive a signal from the cyclic position sensors 211 indicating the actual cyclic stick position, and do not rely on the suggested cyclic stick position to command the swashplate 107.

Similar to the cyclic control assembly 217, the collective control assembly 219 is connected to a collective trim assembly 225 having one or more collective position sensors 215, one or more collective detent sensors 237, and one or more collective actuators or collective trim motors 213. The collective position sensors 215 measure the position of a collective stick 233 in the collective control assembly 219. In some embodiments, the collective stick 233 is a single control stick that moves along a single axis or with a lever type action. A collective position sensor 215 detects the position of the collective stick 233 and sends a collective position signal to the FCCs 205, which controls engines 115, swashplate actuators, or related flight control devices according to the collective position signal to control the vertical movement of the rotorcraft. In some embodiments, the FCCs 205 may send a power command signal to the ECCUs 203 and a collective command signal to the main rotor or swashplate actuators so that the angle of attack of the main blades is raised or lowered collectively, and the engine power is set to provide the needed power to keep the main rotor RPM substantially constant.

The collective trim motor 213 is connected to the FCCs 205, and receives signals from the FCCs 205 to move the collective stick 233. Similar to the determination of the suggested cyclic stick position, in some embodiments, the FCCs 205 determine a suggested collective stick position for the collective stick 233 according to one or more of the cyclic stick position, the pedal position, the speed, altitude and attitude of the rotorcraft, the engine RPM, engine temperature, main rotor RPM, engine torque or other rotorcraft system conditions or flight conditions, or according to a predetermined function selected by the pilot. The FCCs 205 generate the suggested collective stick position and send a corresponding suggested collective stick signal to the collective trim motors 213 to move the collective stick 233 to a particular position. The collective position sensors 215 detect the actual position of the collective stick 233 that is set by the collective trim motor 213 or input by the pilot, allowing the pilot to override the suggested collective stick position.

The pedal control assembly 221 has one or more pedal sensors 227 that measure the position of pedals or other input elements in the pedal control assembly 221. In some embodiments, the pedal control assembly 221 is free of a trim motor or actuator, and may have a mechanical return element that centers the pedals when the pilot releases the pedals. In other embodiments, the pedal control assembly 221 has one or more trim motors that drive the pedal to a suggested pedal position according to a signal from the FCCs 205. The pedal sensor 227 detects the position of the pedals 239 and sends a pedal position signal to the FCCs 205, which controls the tail rotor 109 to cause the rotorcraft to yaw or rotate around a vertical axis.

The cyclic and collective trim motors 209 and 213 may drive the cyclic stick 231 and collective stick 233, respectively, to suggested positions. The cyclic and collective trim motors 209 and 213 may drive the cyclic stick 231 and collective stick 233, respectively, to suggested positions, but this movement capability may also be used to provide tactile cueing to a pilot. The trim motors 209 and 213 may push the respective stick in a particular direction when the pilot is moving the stick to indicate a particular condition. Since the FBW system mechanically disconnects the stick from one or more flight control devices, a pilot may not feel a hard stop, vibration, or other tactile cue that would be inherent in a stick that is mechanically connected to a flight control assembly. In some embodiments, the FCCs 205 may cause the trim motors 209 and 213 to push against a pilot command so that the pilot feels a resistive force, or may command one or more friction devices to provide friction felt when the pilot moves the stick. Thus, the FCCs 205 control the feel of a stick by providing pressure and/or friction on the stick.

Additionally, the cyclic control assembly 217, collective control assembly 219 and/or pedal control assembly 221 may each have one or more detent sensors that determine whether the pilot is handling a particular control device. For example, the cyclic control assembly 217 may have a cyclic detent sensor 235 that determines that the pilot is interacting with the cyclic stick 231, while the collective control assembly 219 has a collective detent sensor 237 that determines whether the pilot is interacting with the collective stick 233. The cyclic detent sensor 235 and the collective detent sensor 237 detect motion and/or the position of each of the respective control sticks that is caused by pilot input, as opposed to motion and/or a position that is caused by commands from the FCCs 205, rotorcraft vibration, and the like, and provide feedback signals indicative of such to the FCCs 205. When the FCCs 205 detect that a pilot has control of, or is manipulating, a particular control stick, the FCCs 205 may determine that control stick to be OOD. Likewise, the FCCs 205 may determine that a control stick is ID when the signals from the cyclic detent sensor 235 and/or the collective detent sensor 237 indicate to the FCCs 205 that the pilot has released the particular control stick. The FCCs 205 may provide different default control or automated commands to one or more flight systems based on the detent status of a particular stick or pilot control.

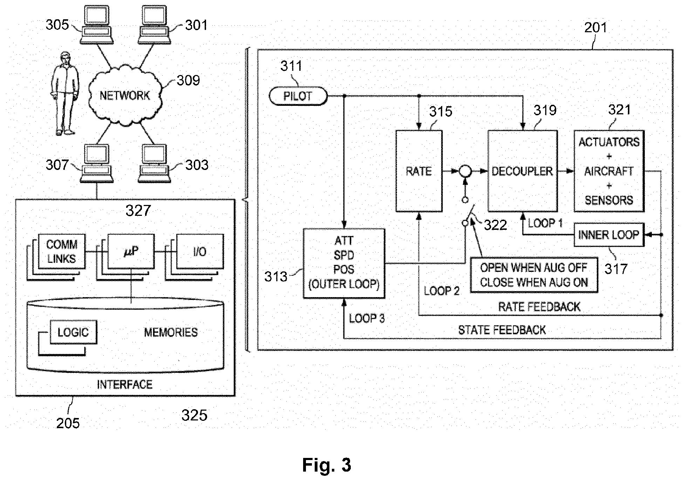

Figure 3 is a block diagram of the flight control system 201, according to some embodiments. Some operational aspects of the flight control system 201 are shown in a highly schematic fashion. In particular, the flight control system 201 is schematically shown as being implemented as a series of interrelated feedback loops running certain control laws. Although the flight control system 201 is illustrated as being a three-loop flight control system, it should be appreciated that the flight control system 201 could be implemented in a different manner, such as with a different quantity of control loops.

In some embodiments, elements of the flight control system 201 may be implemented at least partially by the FCCs 205. The flight control system 201 may include components 301, 303, 305, and 307. All, some, or none of the components (301, 303, 305, 307) of the flight control system 201 could be located externally to or remotely from the rotorcraft 101 and may communicate to on-board devices through a network connection 309.

The flight control system 201 has a pilot input 311, an outer loop 313, a middle loop 315, an inner loop 317, a decoupler 319, and aircraft equipment 321 (corresponding to, *e.g.,* flight control devices such as swashplate 107, tail rotor transmission 121, etc.; actuators (not separately illustrated) driving the flight control devices; sensors such as aircraft sensors 207, cyclic position sensors 211, collective position sensors 215, cyclic detent sensors 235, collective detent sensors 237, etc.; and the like). In the example shown, a three-loop design separates the inner stabilization and rate feedback loops from outer guidance and tracking loops. The control law structure primarily assigns the overall stabilization task and related tasks of reducing pilot workload to the inner loop 317. Next, the middle loop 315 (sometimes called the rate loop) provides rate augmentation. The outer loop 313 focuses on guidance and tracking tasks. Since the inner loop 317 and the middle loop 315 provide most of the stabilization, less control effort is required at the outer loop level. As representatively illustrated, a switch 322 (sometimes called the force trim release (FTR)) may be provided to turn outer loop flight augmentation on and off. The tasks of the outer loop 313 are not necessary for flight stabilization.

In some embodiments, the inner loop 317 and the middle loop 315 include a set of gains and filters applied to roll/pitch/yaw 3-axis rate gyro and acceleration feedback sensors. Both the inner loop and the rate loop may stay active, independent of various outer loop hold modes or the switch 322. The outer loop 313 may include cascaded layers of loops, including an attitude loop, a speed loop, a position loop, a vertical speed loop, an altitude loop, and a heading loop. According to some embodiments, the control laws running in the illustrated loops allow for decoupling of otherwise coupled flight characteristics, which in turn may provide for more stable flight characteristics and reduced pilot workload. Furthermore, the outer loop 313 may allow for automated or semi-automated operation of certain high-level tasks or flight patterns, thus further reducing pilot workload and allowing the pilot to focus on other matters, including observation of the surrounding terrain.

The flight control system 201 may be realized as programming executed by the FCCs 205. The programming includes instructions implementing aspects of the flight control system 201. The FCCs 205 may include memories 325, such as non-transitory computer readable storage mediums, that store the programming. One or more processors 327 are connected to the memories 325, and are operable to execute the programming.

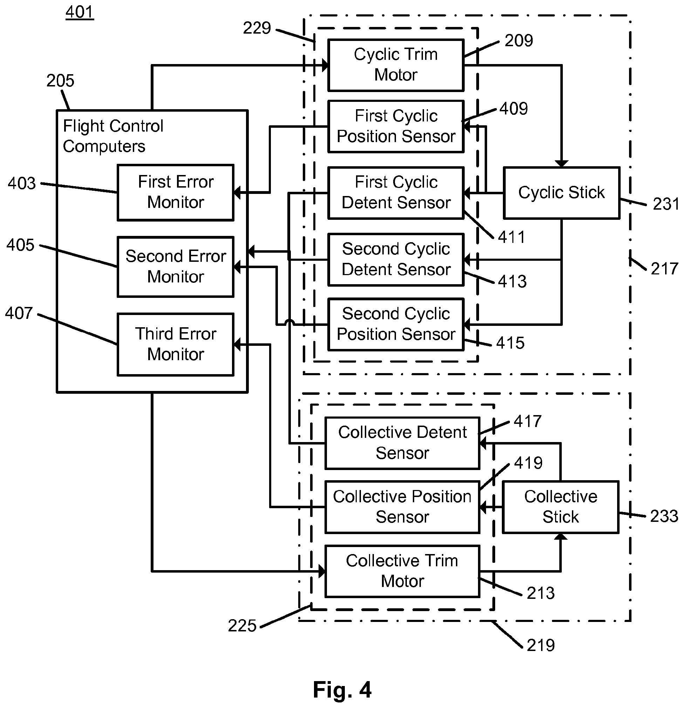

Figure 4 illustrates a sensor functionality determination system 401 for a rotorcraft according to some embodiments. As shown in Figure 4, the sensor functionality determination system 401 includes flight control computers (FCCs) 205, the cyclic control assembly 217, and the collective control assembly 219. The cyclic control assembly 217 includes the cyclic stick 231 and the cyclic trim assembly 229. The collective control assembly includes the collective stick 233 and the collective trim assembly 225. In some embodiments, the FCCs 205 include a plurality of error monitors, such as a first error monitor 403, a second error monitor 405, and a third error monitor 407.

In some embodiments, the cyclic trim assembly 229 includes the cyclic trim motor 209, a first cyclic detent sensor 411, a first cyclic position sensor 409, a second cyclic detent sensor 413, and a second cyclic position sensor 415. As discussed above, the cyclic trim motor 209 may drive the cyclic stick 231 to positions suggested by the FCCs 205. The first cyclic detent sensor 411 and the second cyclic detent sensor 413 may act in concert to determine whether a pilot is interacting with the cyclic stick 231. More specifically, the first cyclic detent sensor 411 and the second cyclic detent sensor 413 may each detect the motion and/or position of the cyclic stick 231 in a different direction that is caused by pilot input along different axes. In an embodiment, the first cyclic detent sensor 411 detects the motion and/or position of the cyclic stick 231 in a first direction along a first axis and the second cyclic detent sensor 413 detects the motion and/or position of the cyclic stick 231 in a second direction along a second axis. The first direction may be the left-right direction and may control the roll of the rotorcraft. The second direction may be the fore-aft direction and may control the pitch of the rotorcraft. In other embodiments, the cyclic trim assembly 229 may only include one cyclic detent sensor which detects motion and/or the position of the cyclic stick 231 in both the first direction and the second direction. The cyclic trim assembly may include more than two cyclic detent sensors, such as three, four, five, or more cyclic detent sensors.

The first cyclic position sensor 409 and the second cyclic position sensor 415 detect the position of the cyclic stick 231. The first cyclic position sensor 409 and the second cyclic position sensor 415 detect the position of the cyclic stick 231 in the first direction and the second direction, respectively, and generate roll and pitch signals, respectively, which are sent to the FCCs 205. The FCCs 205 then control the swashplate 107, engines 115, tail rotor 109 or related flight control devices based on the signals received from the first cyclic position sensor 409 and the second cyclic position sensor 415.

The collective trim assembly 225 may include a collective trim motor 213, a collective detent sensor 417, and a collective position sensor 419. As discussed above, the collective trim motor 213 may drive the collective stick 233 to positions suggested by the FCCs 205. The collective detent sensor 417 may be the same as or similar to the collective detent sensor 237 and the collective position sensor 419 may be the same as or similar to the collective position sensor 215. The collective detent sensor 417 may determine whether the pilot is interacting with the collective stick 233. More specifically, collective detent sensor 417 may detect the motion and/or position of the collective stick 233 that is caused by pilot input.

The collective position sensor 419 measures the position of the collective stick 233. The collective stick 233 may move along a single axis or with a lever type action. The collective position sensor 419 detects the position of the collective stick 233 and sends a collective position signal to the FCCs 205. The FCCs 205 then control the engines 115, swashplate actuators, or related flight control devices according to the collective position signal to control the vertical movement of the rotorcraft.

As illustrated in Figure 4, the first cyclic position sensor 409, the second cyclic position sensor 415, and the collective position sensor 419 (collectively referred to as the "position sensors") send movement/position data signals to the first error monitor 403, the second error monitor 405, and the third error monitor 407 (collectively referred to as the "error monitors"), respectively, based on the actual positions of the control sticks. The first cyclic detent sensor 411, the second cyclic detent sensor 413, and the collective detent sensor 417 (collectively referred to as the "detent sensors") may send detent data signals to the FCCs 205. The FCCs 205 may determine whether the detent sensors are ID or OOD based on the detent data signals, and may send the detent state of the detent sensors to the respective error monitors.

The error monitors may be configured to detect whether any of the detent sensors are faulty. If the error monitors determine that any of the detent sensors are faulty, certain flight modes may be turned off in the FCCs 205, such as flight modes that depend on signals from the detent sensors. For example, outer loop flight augmentation may be turned off if the error monitors determine that any of the detent sensors are faulty. Different flight modes may be turned off in the FCCs 205 depending on which of the detent sensors are determined to be faulty and depending on how many of the detent sensors are determined to be faulty. For example, if the collective position sensor 419 is determined to be faulty, modes that depend on signals from the collective position sensor 419 may be turned off in the FCCs 205. Examples of modes that depend on such signals include a vertical speed hold function, a hover hold mode, or the like. As another example, if either the first cyclic position sensor 409 or the second cyclic position sensor 415 is determined to be faulty, modes that depend on signals from the first cyclic position sensor 409 or the second cyclic position sensor 415 may be turned off in the FCCs. An example of a mode that depends on such signals is a horizontal speed hold function.

In some embodiments, the first error monitor 403, the second error monitor 405, and the third error monitor 407 may comprise persistence monitors. In embodiments of the present disclosure, an error occurs any time that a respective detent sensor indicates that a control stick is ID and the actual movement/position of a control stick is different from the movement/position of the control stick suggested by the FCCs 205. As such, in embodiments in which the error monitors comprise persistence monitors, an error monitor may increase a count each time a respective detent sensor is ID and the actual movement/position of a control stick (determined based on movement/position data provided by a respective position sensor) is different from the movement/position of the control stick suggested by the FCCs 205 (*i.e.,* each time an error is detected). The error monitor may decrease the count each time the detent sensor is ID and the actual movement/position of the control stick is the same as the suggested movement/position of the control stick. The error monitor may determine that the detent sensor is faulty if the count exceeds a threshold value. The threshold value may be, for example, one, five, thirteen, fifteen, twenty, or any other value.

In some embodiments, the error monitor may be configured to not decrease the count or to maintain the count when the detent sensor is ID and the actual movement/position of the control stick is the same as the suggested movement/position of the control stick. The error monitor may be another type of error monitor, such as an accumulator-type error monitor, a self-tuning threshold monitor, a static threshold monitor, a discrete error monitor, or the like.

In some embodiments, the FCCs 205 operate on data discretely using frames. Thus, the FCCs 205 may receive data in regularly timed frames, and operate on the data in the frames. In some embodiments, the FCCs 205 receive fifty data frames per second, although other (*e*.*g*., higher) framerates could be used based on the capabilities of the FCCs 205. The FCCs 205 continuously monitor incoming data frames to determine whether the actual movement/position of the control stick is the same as, or different from, the movement/position of the control stick suggested by the FCCs 205 and to thereby detect whether the detent sensors are faulty. The FCCs 205 may increase, decrease, or maintain the count based on the data in each of the frames.

The error monitors may be latched. For example, in some embodiments, a detection of a faulty detent sensor by the error monitors is not resettable while a rotorcraft is in flight. As such, flight modes in the FCCs 205 that depend on signals from the detent sensors may be turned off until the rotorcraft is landed and the error monitors are reset. In other embodiments, the error monitors may be resettable while the rotorcraft is in flight. In some embodiments, a warning may be displayed on a pilot's monitor if any of the detent sensors are determined to be faulty.

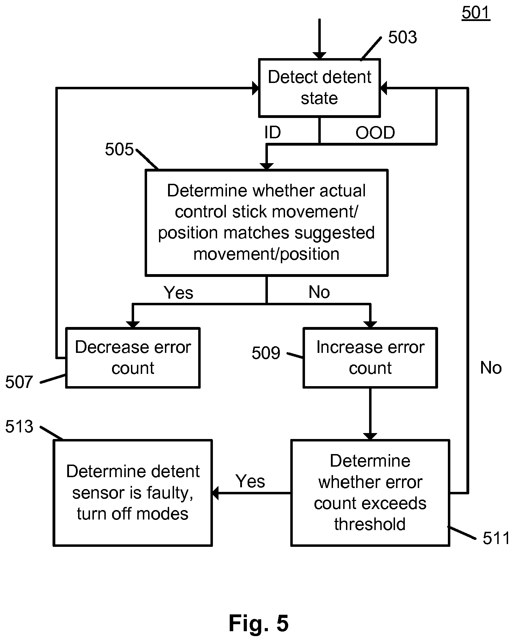

Figure 5 illustrates a flow diagram of a method 501 for determining whether a sensor in a rotorcraft is faulty according to some embodiments. In block 503, the FCCs 205 determine whether a control stick is ID or OOD. In some embodiments, the detent state of the control signal is determined from detent data in a detent data signal received from the detent sensors. If the FCCs 205 determine that the control stick is OOD, block 503 is repeated until the pilot releases the control stick and the FCCs 205 determine that the control stick is ID. If the FCCs 205 determine that the control stick is ID, the method 501 proceeds to block 505.

In block 505, an error monitor determines whether the actual control stick movement/position is the same as the movement/position suggested by the FCCs 205. In some embodiments, the actual control stick movement/position is determined from movement/position data in a movement/position data signal received from the position sensors. If the actual control stick movement/position is the same as the suggested control stick movement/position, the error monitor decreases an error count and the method 501 returns to block 503. If the actual control stick movement/position is different from the suggested control stick movement/position, the error monitor increases an error count and the method 501 proceeds to block 511.

In block 511, the error monitor determines whether the error count exceeds a threshold value. If the error count does not exceed the threshold value, the method 501 returns to block 503. If the error count exceeds the threshold value, the method 501 proceeds to block 513 and the error monitor determines that the detent sensor is faulty. When the detent sensor is determined to be faulty, certain flight modes are turned off, as discussed above.

The error monitors may be used to ensure that none of the detent sensors are faulty. This may prevent a pilot of a rotorcraft from entering larger commands than they intend. For example, if a detent sensor is faulty, pilot commands may not be recognized by the FCCs 205 and the pilot may press the FTR button. If the pilot moved a control stick before pressing the FTR button, this could result in a large unexpected movement by the rotorcraft and could result in a crash. The error monitors prevent these problems by detecting faulty detent sensors.

## Claims

1. A rotorcraft (101) comprising:
a control element (231; 233);
a first control sensor (409, 415, 419) connected to the control element, the first control sensor operable to generate position data indicating an actual position of the control element; and
a flight control computer (FCC) (205) in signal communication with the first control sensor, wherein the FCC is operable to:
determine a suggested position for the control element,
wherein the FCC comprises an error monitor (403, 405, 407), the error monitor operable to compare the suggested position of the control element with the actual position of the control element and determine whether a second control sensor (411, 413, 417) is functional or defective,
wherein the second control sensor is operable to sense a detent state associated with the control element, the detent state indicating whether a pilot has manual control of the control element, and comprising an in-detent state and an out-of-detent state,
**characterized in that** the error monitor is operable to compare the suggested position of the control element with the actual position of the control element only when the control element is in the in-detent state, and wherein the FCC (205) is further operable to:
provide a first flight management function when the second control sensor is determined to be functional, and
provide a second flight management function when the second control sensor is determined to be defective, and
wherein flight modes that depend on signals from the second control sensor are turned off in the second flight management function.

2. The rotorcraft (101) of claim 1, further comprising a trim motor (209, 213) operable to move the control element to the suggested position.

3. The rotorcraft (101) of claim 1 or claim 2, wherein the second control sensor is operable to generate feedback data indicating an input to the control element by the pilot, and wherein the FCC (205) is operable to monitor the feedback data and determine whether the control element is in the in-detent state or the out-of-detent state.

4. The rotorcraft (101) of claim 3, wherein the error monitor (403, 405, 407) is:
a) a persistence monitor; and/or
b) operable to increase a count in response to the suggested position of the control element being different from the actual position of the control element, wherein the error monitor is further operable to decrease the count in response to the suggested position of the control element matching the actual position of the control element, and wherein the error monitor (403, 405, 407) is further operable to determine that the second control sensor is defective in response to the count reaching a threshold value.

5. The rotorcraft (101) of any preceding claim, further comprising a display monitor in signal communication with the FCC (205), wherein the display monitor is operable to display a warning when the second control sensor is determined to be defective.

6. The rotorcraft (101) of any preceding claim, further comprising:
an additional control element;
a third control sensor connected to the additional control element, the third control sensor operable to generate additional position data indicating a second actual position of the additional control element; and
a fourth control sensor connected to the additional control element, the fourth control sensor operable to generate additional feedback data indicating an input to the control element by the pilot, wherein the FCC is in signal communication with the third control sensor and the fourth control sensor, wherein the FCC is operable to monitor the additional feedback data and determine whether the additional control element is in an in-detent state or an out-of-detent state, and wherein the FCC (205) is further operable to monitor the additional position data and determine whether the fourth control sensor is functional or defective.

7. The rotorcraft (101) of claim 1, wherein the FCC (205) comprises:
a processor; and
a non-transitory computer-readable storage medium storing a program to be executed by the processor, the program including instructions for monitoring a functionality of the second control sensor, the instructions for monitoring the functionality including instructions for:
tracking the detent state of the control element, wherein the out-of-detent state indicates that the pilot has manual control of the control element, and wherein the in-detent state indicates that the pilot has released manual control of the control element;
receiving the position data in first frames of a plurality of frames, wherein the position data is received from the first control sensor connected to the control element;
generating suggested position data in second frames of the plurality of frames;
driving the control element to the suggested position based on the suggested position data when the control element is in the out-of-detent state;
comparing the suggested position data to the actual position data; and
determining a functionality status of the second control sensor according to the suggested position data and the actual position data, wherein the functionality status of the second control sensor is determined only when the control element is in the in-detent state

8. The rotorcraft (101) of claim 7, wherein the instructions for monitoring the functionality further comprise:
increasing a count for each frame in which the suggested position data is different from the actual position data; and
decreasing the count for each frame in which the suggested position data is the same as the actual position data; and optionally or preferably,
wherein the second control sensor is determined to be functional in response to the count being less than a threshold value.

9. The rotorcraft of claim 7 or claim 8, wherein the instructions for monitoring the functionality further comprise
receiving feedback data in third frames of the plurality of frames, wherein the feedback data is received from the second control sensor connected to the control element, the feedback data indicating an input to the control element by the pilot; and
generating the detent state of the control element based on the feedback data.

10. The rotorcraft (101) of any one of claims 7 to 9, wherein the first flight management function provides an inner loop (317) flight augmentation, a rate loop (315) flight augmentation, and an outer loop (317) flight augmentation, and wherein the second flight management function provides an inner loop flight augmentation and a rate loop flight augmentation only.

11. The rotorcraft (101) of any one of claims 7 to 9, wherein the FCC is operable to provide an outer loop (317) flight augmentation when the first flight management function is provided, and wherein the FCC is operable to disable the outer loop (317) flight augmentation when the second flight management function is provided.

12. A method for operating a rotorcraft (101), the method comprising :
receiving actual position data for a control element of the rotorcraft from a first control sensor, the first control sensor being connected to the control element, the actual position data representing an actual position of the control element;
determining a detent state of a second control sensor associated with the control element of the rotorcraft, wherein the detent state indicates whether a pilot has manual control of the control element, and wherein the second control sensor has an in-detent state and an out-of-detent state;
generating by a flight control computer (FCC) suggested position data for the control element, the suggested position data representing a suggested position for the control element;
wherein the method is **characterized by**:
comparing the actual position data with the suggested position data only when the control element is in the in-detent state;
determining whether the second control sensor is functional or defective;
providing a first level of flight augmentation when the second control sensor is determined to be functional; and
providing a second level of flight augmentation when the second control sensor is determined to be defective, wherein flight modes that depend on signals from the second control sensor are turned off in the second level of flight augmentation.

13. The method of claim 12, wherein the first level of flight augmentation provides an inner loop augmentation, a rate loop augmentation, and an outer loop augmentation, wherein the second level of flight augmentation provides an inner loop augmentation and a rate loop augmentation, and wherein outer loop augmentation is disabled when the second level of flight augmentation is provided.

14. The method of claim 12 or claim 13, further comprising:
increasing a count each time the actual position data is different from the suggested position data; and
decreasing the count each time the actual position data matches the suggested position data, wherein the first level of flight augmentation is selected when the count is less than a threshold value, and wherein the second level of flight augmentation is selected when the count is greater than the threshold value; and optionally or preferably,
wherein during a flight, the flight augmentation is switchable from the first level of flight augmentation to the second level of flight augmentation, but not from the second level of flight augmentation to the first level of flight augmentation.

15. The method of any one of claims 12 to 14, further comprising:
sending the suggested position data to a trim motor; and
moving the control element to the suggested position, wherein the control element is moved by the trim motor.

16. The method of any one of claims 12 to 15, further comprising receiving feedback data from the second control sensor, wherein determining the detent state of the second control sensor is based on the feedback data.

## Patentansprüche

1. Drehflügler (101), Folgendes umfassend:
ein Steuerelement (231; 233);
einen ersten Steuersensor (409, 415, 419), der mit dem Steuerelement verbunden ist, wobei der erste Steuersensor betreibbar ist, Positionsdaten zu erzeugen, die eine tatsächliche Position des Steuerelements anzeigen; und
einen Flugsteuercomputer (flight control computer - FCC) (205) in Signalkommunikation mit dem ersten Steuersensor, wobei der FCC betreibbar ist zum:
Bestimmen einer vorgeschlagenen Position für das Steuerelement,
wobei der FCC einen Fehlermonitor (403, 405, 407) umfasst, wobei der Fehlermonitor betreibbar ist, um die vorgeschlagene Position des Steuerelements mit der tatsächlichen Position des Steuerelements zu vergleichen und zu bestimmen, ob ein zweiter Steuersensor (411, 413, 417) funktionsfähig oder defekt ist,
wobei der zweite Steuersensor betreibbar ist, um einen dem Steuerelement zugeordneten Detent-Zustand zu erfassen, wobei der Detent-Zustand anzeigt, ob ein Pilot eine manuelle Steuerung des Steuerelements hat, und einen In-Detent-Zustand und einen Nicht-Detent-Zustand umfasst,
**dadurch gekennzeichnet, dass** der Fehlermonitor nur dann betreibbar ist, um die vorgeschlagene Position des Steuerelements mit der tatsächlichen Position des Steuerelements zu vergleichen, wenn sich das Steuerelement im In-Detent-Zustand befindet, und wobei der FCC (205) ferner betreibbar ist zum:
Bereitstellen einer ersten Flugmanagementfunktion, wenn bestimmt wird, dass der zweite Steuersensor funktionsfähig ist, und
Bereitstellen einer zweiten Flugmanagementfunktion, wenn bestimmt wird, dass der zweite Steuersensor defekt ist, und
wobei Flugmodi, die von Signalen von dem zweiten Steuersensor abhängen, in der zweiten Flugmanagementfunktion ausgeschaltet sind.

2. Drehflügler (101) nach Anspruch 1, ferner umfassend einen Trimmmotor (209, 213), der betreibbar ist, um das Steuerelement in die vorgeschlagene Position zu bewegen.

3. Drehflügler (101) nach Anspruch 1 oder Anspruch 2, wobei der zweite Steuersensor betreibbar ist, um Rückmeldedaten zu erzeugen, die eine Eingabe in das Steuerelement durch den Piloten anzeigen, und wobei der FCC (205) betreibbar ist, um die Rückmeldedaten zu überwachen und zu bestimmen, ob sich das Steuerelement im In-Detent-Zustand oder im Nicht-Detent-Zustand befindet.

4. Drehflügler (101) nach Anspruch 3, wobei der Fehlermonitor (403, 405, 407) Folgendes ist:
a) ein Persistenz-Monitor; und/oder
b) betreibbar, um einen Zählwert als Reaktion darauf zu erhöhen, dass die vorgeschlagene Position des Steuerelements von der tatsächlichen Position des Steuerelements abweicht, wobei der Fehlermonitor ferner betreibbar ist, um den Zählwert als Reaktion auf die vorgeschlagene Position des Steuerelements, die mit der tatsächlichen Position des Steuerelements übereinstimmt, zu verringern, und wobei der Fehlermonitor (403, 405, 407) ferner betreibbar ist, um zu bestimmen, dass der zweite Steuersensor defekt ist, als Reaktion darauf, dass der Zählwert einen Schwellenwert erreicht.

5. Drehflügler (101) nach einem der vorhergehenden Ansprüche, ferner umfassend einen Anzeigemonitor in Signalkommunikation mit dem FCC (205), wobei der Anzeigemonitor betreibbar ist, um eine Warnung anzuzeigen, wenn bestimmt wird, dass der zweite Steuersensor defekt ist.

6. Drehflügler (101) nach einem der vorhergehenden Ansprüche, ferner Folgendes umfassend:
ein zusätzliches Steuerelement;
einen dritten Steuersensor, der mit dem zusätzlichen Steuerelement verbunden ist, wobei der dritte Steuersensor betreibbar ist, um zusätzliche Positionsdaten zu erzeugen, die eine zweite tatsächliche Position des zusätzlichen Steuerelements anzeigen; und
einen vierten Steuersensor, der mit dem zusätzlichen Steuerelement verbunden ist, wobei der vierte Steuersensor betreibbar ist, um zusätzliche Rückmeldedaten zu erzeugen, die eine Eingabe in das Steuerelement durch den Piloten anzeigen, wobei der FCC in Signalkommunikation mit dem dritten Steuersensor und dem vierten Steuersensor steht, wobei der FCC betreibbar ist, um die zusätzlichen Rückmeldedaten zu überwachen und zu bestimmen, ob sich das zusätzliche Steuerelement in einem In-Detent-Zustand oder einem Nicht-Detent-Zustand befindet, und wobei der FCC (205) ferner betreibbar ist, um die zusätzlichen Positionsdaten zu überwachen und zu bestimmen, ob der vierte Steuersensor funktionsfähig oder defekt ist.

7. Drehflügler (101) nach Anspruch 1, wobei der FCC (203) Folgendes umfasst:
einen Prozessor; und
ein nichtflüchtiges computerlesbares Speichermedium, das ein durch den Prozessor auszuführendes Programm speichert, wobei das Programm Anweisungen zum Überwachen einer Funktionalität des zweiten Steuersensors beinhaltet, wobei die Anweisungen zur Überwachung der Funktionalität Anweisungen beinhalten zum:
Verfolgen des Detent-Zustands des Steuerelements, wobei der Nicht-Detent-Zustand anzeigt, dass der Pilot eine manuelle Steuerung des Steuerelements hat, und wobei der In-Detent-Zustand anzeigt, dass der Pilot die manuelle Steuerung des Steuerelements freigegeben hat;
Empfangen der Positionsdaten in ersten Rahmen einer Vielzahl von Rahmen, wobei die Positionsdaten von dem mit dem Steuerelement verbundenen ersten Steuersensor empfangen werden;
Erzeugen von vorgeschlagenen Positionsdaten in zweiten Rahmen der Vielzahl von Rahmen;
Antreiben des Steuerelements in die vorgeschlagene Position basierend auf den vorgeschlagenen Positionsdaten, wenn sich das Steuerelement im Nicht-Detent-Zustand befindet;
Vergleichen der vorgeschlagenen Positionsdaten mit den tatsächlichen Positionsdaten; und
Bestimmen eines Funktionalitätszustands des zweiten Steuersensors gemäß den vorgeschlagenen Positionsdaten und den tatsächlichen Positionsdaten, wobei der Funktionalitätszustand des zweiten Steuersensors nur dann bestimmt wird, wenn sich das Steuerelement im In-Detent-Zustand befindet.

8. Drehflügler (101) nach Anspruch 7, wobei die Anweisungen zum Überwachen der Funktionalität ferner Folgendes umfassen:
Erhöhen eines Zählwerts für jeden Rahmen, in dem sich die vorgeschlagenen Positionsdaten von den tatsächlichen Positionsdaten unterscheiden; und
Verringern des Zählwerts für jeden Rahmen, in dem die vorgeschlagenen Positionsdaten mit den tatsächlichen Positionsdaten übereinstimmen; und optional oder bevorzugt,
wobei der zweite Steuersensor als Reaktion darauf, dass der Zählwert kleiner als ein Schwellenwert ist, als funktionsfähig bestimmt wird.

9. Drehflügler nach Anspruch 7 oder Anspruch 8, wobei die Anweisungen zum Überwachen der Funktionalität ferner Folgendes umfassen:
Empfangen von Rückmeldedaten in dritten Rahmen der Vielzahl von Rahmen, wobei die Rückmeldedaten von dem zweiten Steuersensor empfangen werden, der mit dem Steuerelement verbunden ist, wobei die Rückmeldedaten eine Eingabe in das Steuerelement durch den Piloten anzeigen; und
Erzeugen des Detent-Zustands des Steuerelements basierend auf den Rückmeldedaten.

10. Drehflügler (101) nach einem der Ansprüche 7 bis 9, wobei die erste Flugmanagementfunktion eine Flugunterstützung der inneren Schleife (317), eine Flugunterstützung der mittleren Schleife (315) und eine Flugunterstützung der äußeren Schleife (317) bereitstellt und wobei die zweite Flugmanagementfunktion nur eine Flugunterstützung der inneren Schleife und eine Flugunterstützung der mittleren Schleife bereitstellt.

11. Drehflügler (101) nach einem der Ansprüche 7 bis 9, wobei der FCC betreibbar ist, um eine Flugunterstützung der äußeren Schleife (317) bereitzustellen, wenn die erste Flugmanagementfunktion bereitgestellt wird, und wobei der FCC betreibbar ist, die Flugunterstützung der äußeren Schleife (317) zu deaktivieren, wenn die zweite Flugmanagementfunktion bereitgestellt wird.

12. Verfahren zum Betreiben eines Drehflüglers (101), wobei das Verfahren Folgendes umfasst:
Empfangen von tatsächlichen Positionsdaten für ein Steuerelement des Drehflüglers von einem ersten Steuersensor, wobei der erste Steuersensor mit dem Steuerelement verbunden ist, wobei die tatsächlichen Positionsdaten eine tatsächliche Position des Steuerelements darstellen;
Bestimmen eines Detent-Zustands eines zweiten Steuersensors, der dem Steuerelement des Drehflüglers zugeordnet ist, wobei der Detent-Zustand anzeigt, ob ein Pilot eine manuelle Steuerung des Steuerelements hat, und wobei der zweite Steuersensor einen In-Detent-Zustand und einen Nicht-Detent-Zustand aufweist;
Erzeugen von vorgeschlagenen Positionsdaten für das Steuerelement durch einen Flugsteuercomputer (FCC), wobei die vorgeschlagenen Positionsdaten eine vorgeschlagene Position für das Steuerelement darstellen;
wobei das Verfahren durch Folgendes gekennzeichnet ist:
Vergleichen der tatsächlichen Positionsdaten mit den vorgeschlagenen Positionsdaten nur dann, wenn sich das Steuerelement im In-Detent-Zustand befindet;
Bestimmen, ob der zweite Steuersensor funktionsfähig oder defekt ist;
Bereitstellen einer ersten Flugunterstützungs-Stufe, wenn bestimmt wird, dass der zweite Steuersensor funktionsfähig ist; und
Bereitstellen einer zweiten Flugunterstützungs-Stufe, wenn bestimmt wird, dass der zweite Steuersensor defekt ist, wobei Flugmodi, die von Signalen von dem zweiten Steuersensor abhängen, in der zweiten Stufe der Flugunterstützung ausgeschaltet sind.

13. Verfahren nach Anspruch 12, wobei die erste Stufe der Flugunterstützung eine Unterstützung der inneren Schleifen, eine Unterstützung der mittleren Schleife und eine Unterstützung der äußeren Schleife bereitstellt, wobei die zweite Stufe der Flugunterstützung eine Unterstützung der inneren Schleife und eine Unterstützung der mittleren Schleife bereitstellt und wobei die Unterstützung der äußeren Schleife deaktiviert ist, wenn die zweite Stufe der Flugunterstützung bereitgestellt wird.

14. Verfahren nach Anspruch 12 oder Anspruch 13, ferner Folgendes umfassend:
Erhöhen eines Zählwerts jedes Mal, wenn die tatsächlichen Positionsdaten von den vorgeschlagenen Positionsdaten abweichen; und
Verringern des Zählwerts jedes Mal, wenn die tatsächlichen Positionsdaten mit den vorgeschlagenen Positionsdaten übereinstimmen, wobei die erste Stufe der Flugunterstützung ausgewählt wird, wenn der Zählwert kleiner als ein Schwellenwert ist, und wobei die zweite Stufe der Flugunterstützung ausgewählt wird, wenn der Zählwert größer als der Schwellenwert ist; und optional oder bevorzugt
wobei während eines Fluges die Flugunterstützung von der ersten Stufe der Flugunterstützung auf die zweite Stufe der Flugunterstützung umschaltbar ist, nicht jedoch von der zweiten Stufe der Flugunterstützung auf die erste Stufe der Flugunterstützung.

15. Verfahren nach einem der Ansprüche 12 bis 14, ferner Folgendes umfassend:
Senden der vorgeschlagenen Positionsdaten an einen Trimmmotor; und
Bewegen des Steuerelements in die vorgeschlagene Position, wobei das Steuerelement durch den Trimmmotor bewegt wird.

16. Verfahren nach einem der Ansprüche 12 bis 15, ferner umfassend das Empfangen von Rückmeldedaten von dem zweiten Steuersensor, wobei das Bestimmen des Detent-Zustands des zweiten Steuersensors auf den Rückmeldedaten basiert.

## Revendications

1. Giravion (101) comprenant :
un élément de commande (231 ; 233) ;
un premier capteur de commande (409, 415, 419) connecté à l'élément de commande, le premier capteur de commande pouvant être utilisé pour générer des données de position indiquant une position réelle de l'élément de commande ; et
un ordinateur de commande de vol (FCC) (205) en communication de signaux avec le premier capteur de commande, dans lequel le FCC peut être utilisé pour :
déterminer une position suggérée pour l'élément de commande,
dans lequel le FCC comprend un moniteur d'erreur (403, 405, 407), le moniteur d'erreur pouvant être utilisé pour comparer la position suggérée de l'élément de commande avec la position réelle de l'élément de commande et déterminer si un deuxième capteur de commande (411, 413, 417) est fonctionnel ou défectueux,
dans lequel le deuxième capteur de commande peut être utilisé pour détecter un état de détente associé à l'élément de commande, l'état de détente indiquant si un pilote a une commande manuelle de l'élément de commande, et comprenant un état en détente et un état hors détente,
**caractérisé en ce que** le moniteur d'erreur peut être utilisé pour comparer la position suggérée de l'élément de commande avec la position réelle de l'élément de commande uniquement lorsque l'élément de commande est dans l'état en détente, et dans lequel le FCC (205) peut en outre être utilisé pour :
fournir une première fonction de gestion de vol lorsque le deuxième capteur de commande est déterminé comme étant fonctionnel, et
fournir une seconde fonction de gestion de vol lorsque le deuxième capteur de commande est déterminé comme étant défectueux, et
dans lequel les modes de vol qui dépendent des signaux provenant du deuxième capteur de commande sont désactivés dans la seconde fonction de gestion de vol.

2. Giravion (101) selon la revendication 1, comprenant en outre un moteur de trim (209, 213) pouvant être utilisé pour déplacer l'élément de commande vers la position suggérée.

3. Giravion (101) selon la revendication 1 ou la revendication 2, dans lequel le deuxième capteur de commande peut être utilisé pour générer des données de rétroaction indiquant une entrée dans l'élément de commande par le pilote, et dans lequel le FCC (205) peut être utilisé pour surveiller les données de rétroaction et déterminer si l'élément de commande est dans l'état en détente ou dans l'état hors détente.

4. Giravion (101) selon la revendication 3, dans lequel le moniteur d'erreur (403, 405, 407) est :
a) un moniteur de persistance ; et/ou
b) utilisable pour augmenter un compte en réponse au fait que la position suggérée de l'élément de commande est différente de la position réelle de l'élément de commande, dans lequel le moniteur d'erreur peut en outre être utilisé pour diminuer le compte en réponse au fait que la position suggérée de l'élément de commande correspond à la position réelle de l'élément de commande, et dans lequel le moniteur d'erreur (403, 405, 407) peut en outre être utilisé pour déterminer que le deuxième capteur de commande est défectueux en réponse au fait que le compte atteint une valeur seuil.

5. Giravion (101) selon une quelconque revendication précédente, comprenant en outre un moniteur d'affichage en communication de signaux avec le FCC (205), dans lequel le moniteur d'affichage peut être utilisé pour afficher un avertissement lorsque le deuxième capteur de commande est déterminé comme étant défectueux.

6. Giravion (101) selon une quelconque revendication précédente, comprenant en outre :
un élément de commande supplémentaire ;
un troisième capteur de commande connecté à l'élément de commande supplémentaire, le troisième capteur de commande pouvant être utilisé pour générer des données de position supplémentaires indiquant une seconde position réelle de l'élément de commande supplémentaire ; et
un quatrième capteur de commande connecté à l'élément de commande supplémentaire, le quatrième capteur de commande pouvant être utilisé pour générer des données de rétroaction supplémentaires indiquant une entrée dans l'élément de commande par le pilote, dans lequel le FCC est en communication de signaux avec le troisième capteur de commande et le quatrième capteur de commande, dans lequel le FCC peut être utilisé pour surveiller les données de rétroaction supplémentaires et déterminer si l'élément de commande supplémentaire est dans un état en détente ou dans un état hors détente, et dans lequel le FCC (205) peut en outre être utilisé pour surveiller les données de position supplémentaires et déterminer si le quatrième capteur de commande est fonctionnel ou défectueux.

7. Giravion (101) selon la revendication 1, dans lequel le FCC (205) comprend :
un processeur ; et
un support de stockage non transitoire lisible par ordinateur stockant un programme devant être exécuté par le processeur, le programme comportant des instructions pour surveiller une fonctionnalité du deuxième capteur de commande, les instructions pour surveiller la fonctionnalité comportant des instructions pour :
suivre l'état de détente de l'élément de commande, dans lequel l'état hors détente indique que le pilote a une commande manuelle de l'élément de commande, et dans lequel l'état en détente indique que le pilote a relâché la commande manuelle de l'élément de commande ;
recevoir les données de position dans des premières trames d'une pluralité de trames, dans lequel les données de position sont reçues du premier capteur de commande connecté à l'élément de commande ;
générer des données de position suggérées dans des deuxièmes trames de la pluralité de trames ;
amener l'élément de commande vers la position suggérée sur la base des données de position suggérées lorsque l'élément de commande est dans l'état hors détente ;
comparer les données de position suggérées aux données de position réelles ; et
déterminer un état de fonctionnalité du deuxième capteur de commande en fonction des données de position suggérées et des données de position réelles, dans lequel l'état de fonctionnalité du deuxième capteur de commande est déterminé uniquement lorsque l'élément de commande est dans l'état en détente.

8. Giravion (101) selon la revendication 7, dans lequel les instructions pour surveiller la fonctionnalité comprennent en outre :
l'augmentation d'un compte pour chaque trame dans laquelle les données de position suggérées sont différentes des données de position réelles ; et
la diminution du compte pour chaque trame dans laquelle les données de position suggérées sont les mêmes que les données de position réelles ; et éventuellement ou de préférence,
dans lequel le deuxième capteur de commande est déterminé comme étant fonctionnel en réponse au fait que le compte est inférieur à une valeur seuil.

9. Giravion selon la revendication 7 ou la revendication 8, dans lequel les instructions pour surveiller la fonctionnalité comprennent en outre
la réception de données de rétroaction dans des troisièmes trames de la pluralité de trames, dans lequel les données de rétroaction sont reçues du deuxième capteur de commande connecté à l'élément de commande, les données de rétroaction indiquant une entrée dans l'élément de commande par le pilote ; et
la génération de l'état de détente de l'élément de commande sur la base des données de rétroaction.

10. Giravion (101) selon l'une quelconque des revendications 7 à 9, dans lequel la première fonction de gestion de vol fournit une augmentation de vol en boucle interne (317), une augmentation de vol en boucle de débit (315) et une augmentation de vol en boucle externe (317), et dans lequel la seconde fonction de gestion de vol fournit uniquement une augmentation de vol en boucle interne et une augmentation de vol en boucle de débit.

11. Giravion (101) selon l'une quelconque des revendications 7 à 9, dans lequel le FCC peut être utilisé pour fournir une augmentation de vol en boucle externe (317) lorsque la première fonction de gestion de vol est fournie, et dans lequel le FCC peut être utilisé pour désactiver l'augmentation de vol en boucle externe (317) lorsque la seconde fonction de gestion de vol est fournie.

12. Procédé pour faire fonctionner un giravion (101), le procédé comprenant :
la réception de données de position réelle pour un élément de commande du giravion à partir d'un premier capteur de commande, le premier capteur de commande étant connecté à l'élément de commande, les données de position réelle représentant une position réelle de l'élément de commande ;
la détermination d'un état de détente d'un deuxième capteur de commande associé à l'élément de commande du giravion, dans lequel l'état de détente indique si un pilote a une commande manuelle de l'élément de commande, et dans lequel le deuxième capteur de commande a un état en détente et un état hors détente ;
la génération par un ordinateur de commande de vol (FCC) des données de position suggérées pour l'élément de commande, les données de position suggérées représentant une position suggérée pour l'élément de commande ;
dans lequel le procédé est **caractérisé par** :
la comparaison des données de position réelles avec les données de position suggérées uniquement lorsque l'élément de commande est dans l'état en détente ;
le fait de déterminer si le deuxième capteur de commande est fonctionnel ou défectueux ;
la fourniture d'un premier niveau d'augmentation de vol lorsque le deuxième capteur de commande est déterminé comme étant fonctionnel ; et
la fourniture d'un second niveau d'augmentation de vol lorsque le deuxième capteur de commande est déterminé comme étant défectueux, dans lequel les modes de vol qui dépendent des signaux provenant du deuxième capteur de commande sont désactivés dans le second niveau d'augmentation de vol.

13. Procédé selon la revendication 12, dans lequel le premier niveau d'augmentation de vol fournit une augmentation de boucle interne, une augmentation de boucle de débit et une augmentation de boucle externe, dans lequel le second niveau d'augmentation de vol fournit une augmentation de boucle interne et une augmentation de boucle de débit, et dans lequel l'augmentation de boucle externe est désactivée lorsque le second niveau d'augmentation de vol est fourni.

14. Procédé selon la revendication 12 ou la revendication 13, comprenant en outre :
l'augmentation d'un compte chaque fois que les données de position réelles sont différentes des données de position suggérées ; et
la diminution du compte chaque fois que les données de position réelles correspondent aux données de position suggérées, dans lequel le premier niveau d'augmentation de vol est sélectionné lorsque le compte est inférieur à une valeur seuil, et dans lequel le second niveau d'augmentation de vol est sélectionné lorsque le compte est supérieur à la valeur seuil ; et éventuellement ou de préférence,
dans lequel pendant un vol, l'augmentation de vol peut être commutée du premier niveau d'augmentation de vol au second niveau d'augmentation de vol, mais pas du second niveau d'augmentation de vol au premier niveau d'augmentation de vol.

15. Procédé selon l'une quelconque des revendications 12 à 14, comprenant en outre :
l'envoi des données de position suggérées à un moteur de trim ; et
le déplacement de l'élément de commande vers la position suggérée, dans lequel l'élément de commande est déplacé par le moteur de trim.

16. Procédé selon l'une quelconque des revendications 12 à 15, comprenant en outre la réception de données de rétroaction provenant du deuxième capteur de commande, dans lequel la détermination de l'état de détente du deuxième capteur de commande est basée sur les données de rétroaction.
